# EUROPÄISCHE PATENTSCHRIFT

(11) **EP 3 392 119 B1**
(45) Veröffentlichungstag und Bekanntmachung des Hinweises auf die Patenterteilung: **22.05.2019**
(21) Anmeldenummer: 18000204.0
(22) Anmeldetag: 02.03.2018
(51) Int. Cl.: B62B 3/14

(54) **FLASCHENHALTERUNG SOWIE FLASCHENHALTERUNGSEINHEIT**
BOTTLE HOLDER AND BOTTLE HOLDING UNIT
SUPPORT DE BOUTEILLES ET UNITÉ DE SUPPORT DE BOUTEILLES

(30) Priorität: 18.04.2017 DE 202017002046 U
(43) Veröffentlichungstag der Anmeldung: 24.10.2018
(73) Patentinhaber: Bolz, Michael, 74078 Heilbronn (DE)
(72) Erfinder: Bolz, Michael, 74078 Heilbronn (DE)

(56) Entgegenhaltungen:
- WO-A2-2011/060039
- US-A- 2 763 413
- US-A- 5 938 091
- US-A1- 2007 085 282
- US-A1- 2007 085 283
- US-A1- 2009 236 381

## Beschreibung

Die Erfindung betrifft eine Flaschenhalterung zum Befestigen an einer durch kreuzweise angeordnete Gitterstäbe gebildeten Drahtgitterstruktur gemäß dem Oberbegriff von Anspruch 1.

Daraus resultierend betrifft die Erfindung auch eine Flaschenhalterungseinheit.

Man kennt "Kleinartikelschalen", die sich an der Innenseite der Korbstimwand von Einkaufswagen befinden. Solche Kleinartikelschalen sind quaderförmig ausgebildet und nach oben offen, so dass man kleinere Artikel, oder aber auch wenigstens eine Getränkeflasche, in liegender oder in aufrechter Lage in den Kleinartikelschalen abstellen kann. Die somit auch als Flaschenhalterung benutzbaren Kleinartikelschalen sind entweder als Drahtgitterstruktur oder aus Kunststoff bestehend gestaltet. Bei den als Drahtgitterstruktur vorliegenden Kleinartikelschalen werden über den Umriss der Kleinartikelschalen hinaus ragende Drähte dazu benutzt, die Kleinartikelschalen an der gitterförmigen Stirnwand der Körbe der Einkaufswagen zu befestigen, indem man diese überstehenden Drähte einfach um passende horizontale Gitterstäbe der Korbstimwand herum biegt. Zur Befestigung der aus Kunststoff bestehenden Kleinartikelschalen benutzt man gewöhnlich aus Flachmaterial bestehende Gegenhalter, die man an der Außenseite einer Korbstirnwand anlegt und die Kleinartikelschale mit dem Gegenhalter verschraubt oder vernietet.

Bei einem Einkaufswagen, der von der Wanzl Metallwarenfabrik GmbH, Deutschland entwickelt wurde und der für die Benutzer von Rollstühlen bestimmt ist, befindet sich an der Innenseite einer der beiden Korbseitenwände eine Flaschenhalterung, die eine Führungseinrichtung zur Aufnahme von zwei aufrechtstehenden Getränkeflaschen aufweist. Die Flaschenhalterung besteht aus einem die Getränkeflaschen größtenteils umspannenden Drahtstück, das mit einigen senkrechten Drähten der Korbseitenwand verschweißt ist. In der Flaschenhalterung befindliche Getränkeflaschen stehen dabei auf dem Korbboden auf.

Das Dokument US 2008/0237284 A1 beschreibt einen Becherhalter für Einkaufswagen. Der Becherhalter weist eine ringförmige Aufnahme auf, in welche ein Getränkebecher eingehängt werden kann. Allerdings besitzt der Becherhalter keine als Boden vorgesehene Stützeinrichtung. Auch lässt sich dieser Becherhalter nicht an einer Drahtgitterstruktur befestigen. Jedenfalls scheint eine solche Möglichkeit im genannten Dokument nicht beschrieben zu sein.

Einen Becherhalter offenbart auch das Dokument US 2015/0158517 A1. Auch dieser Becherhalter besitzt keine als Boden vorgesehene Stützeinrichtung. Der Becherhalter ist aus faltbarem Material gebildet und weist, ähnlich wie der zuvor beschriebene Becherhalter, zwei Befestigungsmittel auf, mit deren Hilfe sich der Becherhalter auf den oberen Rand einer Drahtgitterstruktur aufsetzen lässt, wobei er an den beiden senkrechten Flächenabschnitten der Drahtgitterstruktur anliegt.

Im Dokument US 2007/0085282 A1 ist ebenfalls ein Becherhalter beschrieben, der eine als Boden gestaltete Stützeinrichtung aufweist und sich auf den oberen Rand einer Drahtgitterstruktur, im Beispiel ist es eine Seitenwand eines Einkaufswagens, aufsetzen lässt. Der Becherhalter ist im wesentlichen aus einem einzigen Draht geformt, wobei der Becherhalter mit zwei horizontalen Schenkelabschnitten auf dem oberen Rand der Drahtgitterstruktur aufliegt. Mit Hilfe eines Klemmteils wird der Becherhalter an den senkrechten Abschnitt der Dahtgitterstruktur angeschraubt.

Ähnlich wie eben beschrieben vermittelt das Dokument US 2007/0085283 A1 einen Becherhalter, welcher ebenfalls größtenteils aus einem einzigen Draht geformt ist und einen Boden sowie eine Führungseinrichtung zum Abstellen eines Bechers aufweist. Der Becherhalter ist im Beispiel am oberen Bereich der schwenkbaren Rückwand eines Einkaufswagens mit Hilfe einer Platte und eines Gegenhalters mit der Rückwand verschraubt. Wie bereits zuvor beschrieben, sind auch bei dieser Ausführung zusätzliche Befestigungsmittel zum Befestigen des Becherhalters erforderlich.

Schließlich wird man durch das Dokument US 2009/0236381 A1 über einen klappbaren Becherhalter gemäß dem Oberbegriff von Anspruch 1 informiert, dessen Führungseinrichtung und dessen Boden um jeweils eine horizontale Achse bewegbar mit einem Rücken verbunden ist. Der Rücken ist zum Anliegen an eine Drahtgitterstruktur bestimmt und weist eine mit vier ortsfest angeordneten klammerartigen Befestigungsmitteln ausgestattete Befestigungsmittelanordnung auf. Zusammen mit wenigstens eines oberen Befestigungsmittels, das zum Ergreifen eines horizontalen Gitterstabs bestimmt ist, lässt sich der Becherhalter von oben her auf eine Drahtgitterstruktur aufsetzen. An wenigstens einer Seite des Becherhalters sind die Führungseinrichtung und der Boden durch einen Steg gelenkig so verbunden, dass durch den Steg nicht nur eine Verbindung zwischen der Führungseinrichtung und dem Boden hergestellt ist, sondern der Steg übernimmt auch die Funktion einer so genannten Koppel, so dass ein raumsparendes Zusammenfalten des Becherhalters nach Art eines Gelenkvierecks möglich ist. Der wenigstens eine Steg bedeutet ein zusätzliches Teil, was die Herstellkosten erhöht.

Ausgehend von diesem Stand der Technik besteht die Aufgabe der Erfindung darin, eine Flaschenhalterung der eingangs genannten Art so zu gestalten, dass diese ohne zusätzliches Klemmteil auskommt. Darüber hinaus soll die aufzufindende Flaschenhalterung zur Bildung von Flaschenhalterungseinheiten geeignet sein.

Die Lösung der Aufgabe ist im kennzeichnenden Teil des Anspruches 1 beschrieben.

Gegenüber den zum Stand der Technik zählenden und eingangs beschriebenen Dokumenten weist die jetzt aufgefundene Lösung weitere entscheidende Vorteile auf. Es sind keinerlei zusätzlichen Befestigungsteile irgendwelcher Art erforderlich, um die Flaschenhalterung an einer Drahtgitterstruktur befestigen zu können. Auf diese Weise lassen sich die Herstell- und Montagekosten erheblich reduzieren. Die Flaschenhalterung lässt sich mit einer weiteren Flaschenhalterung auf einfachste Weise und mit äußerst geringem Zeitaufwand zusammenfügen, so dass eine aus mindestens zwei Flaschenhalterungen bestehende Flaschenhalterungseinheit durch einfaches Zusammenschieben der beiden Flaschenhalterungen gebildet werden kann. Dabei erweist es sich als besonders vorteilhaft, wenn man den Aufnahmebereich des wenigstens einen für einen vertikalen Gitterstab bestimmten Befestigungsmittels breiter ausführt, als die Dicke des entsprechenden vertikalen Gitterstabs. Auf diese Weise können beim Befestigen einer Flaschenhalterungseinheit an einer Drahtgitterstruktur die zwangsläufig auftretenden, zwischen den vertikalen Gitterstäben sich bildenden Maßtoleranzen einerseits und den Abstandsmaßen der jeweils für die Aufnahme eines vertikalen Gitterstabs bestimmten Befestigungsmittel andererseits problemlos überbrückt werden.

Die Erfindung wird anhand von zeichnerisch dargestellten Ausführungsbeispielen näher erläutert. Es zeigt
- Fig. 1: eine an einer Drahtgitterstruktur befestigte Flaschenhalterung;
- Fig. 2: und Fig. 3 zwei unterschiedliche Befestigungsmittelanordnungen;
- Fig. 4: eine weitere zweckmäßige Gestaltung eines Befestigungsmittels, das zum Ergreifen eines senkrechten Gitterstabs geeignet ist;
- Fig. 5: drei miteinander verbundene Flaschenhalterungen sowie
- Fig. 6: die Anordnung einer oder mehrerer Flaschenhalterungen bei einem Einkaufswagen.

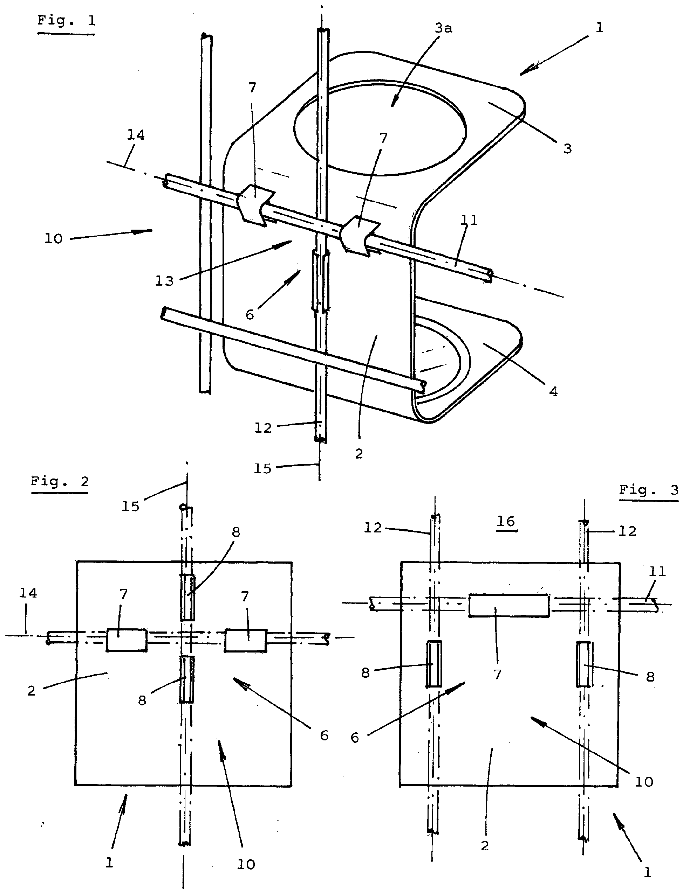

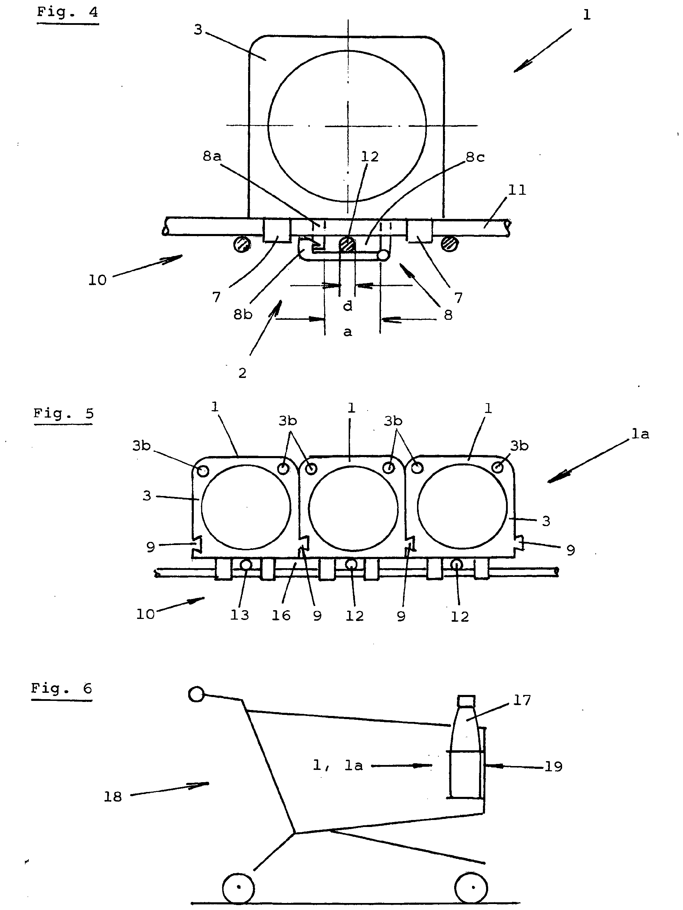

Fig. 1 zeigt eine an einer Drahtgitterstruktur 10 befestigte, bevorzugt aus Kunststoff bestehende Flaschenhalterung 1. Die Flaschenhalterung 1 weist eine Führungseinrichtung 3 und unterhalb der Führungseinrichtung 3 eine Stützeinrichtung 4 auf, die beide an einem Rücken 2 der Flaschenhalterung 1 angeformt sind. Die Führungseinrichtung 3 ist zum Umfassen von wenigstens einer in der Flaschenhalterung 1 befindlichen Getränkeflasche 17, siehe Fig. 6, bestimmt und kann beispielsweise eine runde oder gerundete Öffnung 3a aufweisen. Die Getränkeflasche 17 wiederum liegt auf der als Boden dienenden Stützeinrichtung 4 auf. Am Rücken 2 ist, entgegengesetzt zur Führungseinrichtung 3 und Stützeinrichtung 4 angeordnet, eine Befestigungsmittelanordnung 6 vorgesehen, die wenigstens ein erstes Befestigungsmittel 7 zum Ergreifen eines horizontalen Gitterstabs 11 und wenigstens ein zweites Befestigungsmittel 8 zum Ergreifen eines vertikalen Gitterstabs 12 der Drahtgitterstruktur 10 aufweist. Der Begriff "Ergreifen" ist hier gleichbedeutend mit einem teilweisen Umfassen eines Gitterstabs 11, 12, oder gleichbedeutend mit einem Hintergreifen eines Gitterstabs 11, 12. Das "Ergreifen" kann auch rastschlüssig erfolgen. Im Beispiel sind zwei erste Befestigungsmittel 7 und ein zweites Befestigungsmittel 8 vorgesehen. Das zweite Befestigungsmittel 8 ist zwischen den beiden ersten Befestigungsmitteln 7 angeordnet, wobei dies nicht auf gleicher Höhe erfolgen muss, sondern auch höhenversetzt erfolgen kann, siehe Zeichnung. Die Flaschenhalterung 1 ist mit Hilfe der beiden ersten Befestigungsmittel 7 an einem horizontalen Gitterstab 11 bevorzugt rastschlüssig eingehängt, während das zweite Befestigungsmittel 8 an einem vertikalen Gitterstab 12 eingerastet ist, so dass die Flaschenhalterung 1 gegen horizontales und gegen vertikales Verschieben gesichert ist. Die Befestigungsmittelanordnung 6 nutzt im Beispiel den Kreuzungsbereich 13 eines horizontalen und eines vertikalen Gitterstabes 11, 12 der Drahtgitterstruktur 10. Die Flaschenhalterung 1 ist somit an einem Kreuzungsbereich 13 zweier Gitterstäbe 11, 12 befestigt. Die Flaschenhalterung 1 wird von oben her mit Hilfe der beiden ersten Befestigungsmittel 7 auf einen horizontalen Gitterstab 11 gesetzt und nach unten gedrückt, so dass die beiden ersten Befestigungsmittel 7 am horizontalen Gitterstab 11 bevorzugt eingerastet sind. Anschließend drückt man die Flaschenhalterung 1 gegen den dazu passenden vertikalen Gitterstab 12, so dass das zweite Befestigungsmittel 8 ebenfalls rastschlüssig mit dem vertikalen Gitterstab 12 verbunden ist, wobei sich bei dieser Anordnung der erwähnte Gitterstab 12 zwischen den beiden ersten Befestigungsmitteln 7 befindet. Im Beispiel befindet sich die Befestigungsmittelanordnung 6 innerhalb des Umrisses des Rückens 2.
An der Flaschenhalterung 1 sind hier nicht näher dargestellte Verbindungsmittel 9 vorgesehen, die jedoch in der Beschreibung zu Fig. 5 näher erläutert sind. Die Verbindungsmittel 9 dienen dazu, wenigstens zwei oder mehr Flaschenhalterungen 1, so wie in Fig. 5 gezeigt, zu einer Flaschenhalterungseinheit 1a zusammenzufügen.

Fig. 2 zeigt mit Blick auf den Rücken 2 der Flaschenhalterung 1 eine von Fig. 1 abweichende Befestigungsmittelanordnung 6. Es sind nun zwei erste Befestigungsmittel 7 und zwei zweite Befestigungsmittel 8 vorgesehen, die eine Kreuzform bilden. Oberhalb und unterhalb der auf einer horizontalen Achse 14 liegenden ersten Befestigungsmittel 7 ist jeweils ein zweites Befestigungsmittel 8 vorgesehen, wobei die beiden zweiten Befestigungsmittel 8 auf einer vertikalen Achse 15 angeordnet sind und sich zwischen den beiden ersten Befestigungsmitteln 7 befinden.

Ebenfalls mit Blick auf den Rücken 2 zeigt Fig. 3 eine weitere Befestigungsmittelanordnung 6. Bei dieser Ausführungsform wird, im Gegensatz zu den in Fig. 1 und 2 beschriebenen Anordnungen, der Zwischenraum 16 zweier vertikaler Gitterstäbe 12 einer Drahtgitterstruktur 10 genutzt. In montiertem Zustand der Flaschenhalterung 1 an einer Drahtgitterstruktur 10 befindet sich ein erstes Befestigungsmittel 7 zwischen zwei vertikalen Gitterstäben 12. Das erste Befestigungsmittel 7 ist mit einem horizontalen Gitterstab 11 verbunden, während zwei zweite Befestigungsmittel 8 an je einem benachbarten vertikalen Gitterstab 12 eingerastet sind. Das erste Befestigungsmittel 7 ist demnach zwischen zwei zweiten Befestigungsmitteln 8 angeordnet.

In einer Draufsicht zeigt Fig. 4 eine Flaschenhalterung 1, die mit Hilfe ihrer beiden ersten Befestigungsmittel 7 auf einen horizontalen Gitterstab 11 einer Drahtgitterstruktur 10 aufgesetzt ist. Zwischen den beiden ersten Befestigungsmitteln 7 befindet sich, am Rücken 2 angeformt, ein zweites Befestigungsmittel 8, das ein ortsfestes Verschlussteil 8a und ein bewegbares Rastteil 8b aufweist. Das Verschlussteil 8a und das Rastteil 8b bilden zusammen mit dem Rücken 2 einen Zwischenraum 8c, in dem sich ein vertikaler Gitterstab 12 befindet. In Draufsicht betrachtet ist die Breite a des Zwischenraums 8c größer als die Dicke d des vertikalen Gitterstabs 12. Beim Aufsetzen der so gestalteten Flaschenhalterung 1 befindet sich das Rastteil 8b in nicht verrasteter Position, so dass der vertikale Gitterstab 12 vom Zwischenraum 8c aufgenommen werden kann. Anschließend wird das Rastteil 8b, wie gezeichnet, eingerastet, so dass der Zwischenraum 8c verschlossen ist. Sind maßliche Toleranzen zu berücksichtigen, was bei einer Drahtgitterstruktur 10 durchaus der Fall sein kann und sollen zwei oder mehrere miteinander verbundene Flaschenhalterungen 1, siehe Fig. 5, auf eine Drahtgitterstuktur 10 aufgesetzt werden, bieten die entsprechend breit gestalteten Zwischenräume 8c die Möglichkeit einer Anpassung. Aus der Zeichnung ist ersichtlich, dass die hier vorgeschlagene Flaschenhalterung 1 im Zuge der erwähnten Anpassung auf dem horizontalen Gitterstab 11 um die Wegstrecke a minus d hin und herbewegt werden kann. Auch bei diesem Ausführungsbeispiel ergreift das wenigstens eine zweite Befestigungsmittel 8 einen vertikalen Gitterstab 12.

Fig. 5 zeigt in einer Draufsicht eine aus drei Flaschenhalterungen 1 bestehende Flaschenhalterungseinheit 1a. Die Flaschenhalterungen 1 liegen aneinander an und werden durch korrespondierende Verbindungsmittel 9, etwa durch senkrecht angeordnete Nut- und Federverbindungen, beispielsweise nach dem "Schwalbenschwanzprinzip" zusammengehalten. Die Verbindungsmittel 9 befinden sich an jeder Flaschenhalterung 1. Die Verbindungsmittel 9 können auch in einer anderen bekannten und geeigneten Ausführungsform vorliegen. Auch können die Verbindungsmittel 9 nicht senkrecht, sondern waagrecht angeordnet sein. Im Beispiel wird eine zweite Flaschenhalterung 1 von oben her mit einer ersten Flaschenhalterung 1 durch Nachuntenschieben verbunden. Eine weitere Flaschenhalterung 1 kann in gleicher Weise mit der zweiten Flaschenhalterung 1 verbunden werden. Entsprechend vorgesehene Anschläge können den senkrecht oder waagrecht verlaufenden Zusammenschiebevorgang begrenzen, so dass sich nach Ende dieses Vorgangs alle miteinander verbundenen Flaschenhalterungen 1 auf einer gemeinsamen Ebene befinden. Eine derartige Anordnung ist vor allem dann möglich, wenn bei Drahtgitterstrukturen 10 immer gleiche Abstände der Kreuzungsbereiche 13 und damit immer gleiche Abstände der zwischen vertikalen Gitterstäben 12 befindlichen Zwischenräume 16 vorliegen. Eine Flaschenhalterungseinheit 1a wird durch wenigstens zwei miteinander verbundene Flaschenhalterungen 1 gebildet und kann alle technischen Merkmale aufweisen, wie hier beschrieben.
Im Beispiel sind die einzelnen Flaschenhalterungen 1 mit Mitteln 3b ausgestattet, die sich an der Führungseinrichtung 3 und/oder an der Stützeinrichtung 4 befinden und die es ermöglichen, an jeder Flaschenhalterung 1 einen Werbeträger bekannter Art anzubringen. Die Mittel 3b können üblicherweise durch Zapfen, Schlitze, Öffnungen, Durchbrüche und dergleichen gebildet sein, die mit entprechenden, am Werbeträger vorgesehenen Befestigungsmitteln korrespondieren. Somit können Flaschenhalter 1 entstehen, die mit einem Werbeträger ausgestattet sind.

Fig. 6 zeigt ein praktisches Ausführungsbeispiel anhand eines handelsüblichen Einkaufswagens 18. Von der Seite dargestellt zeigt die Zeichnung wenigstens einen oder mehr als einen, in diesem Falle deckungsgleich dargestellte Flaschenhalterungen 1, die bei wenigstens zwei zusammengefügten Flaschenhalterungen 1 eine Flaschenhalterungseinheit 1a bilden. An der Innenseite der einer Drahtgitterstruktur 10 entsprechenden Korbstimwand 19 des Einkaufswagens 18 ist die Flaschenhalterungseinheit 1a befestigt. Der Deutlichkeit wegen ist eine Getränkeflasche 17 in aufrechter Position eingezeichnet.

Die Erfindung lässt Modifikationen und Ergänzungen zu. So kann die Führungseinrichtung 3 innerhalb ihrer Öffnung 3a mit in gleichen Abständen nach unten weisenden, elastischen und ausweichbaren Stützelementen ausgestattet sein, so dass es möglich ist, Getränkeflaschen mit unterschiedlichen Durchmessern, sicher abzustellen und zu halten.

Ebenso ist es möglich, mit der Anzahl der ersten und zweiten Befestigungsmittel 7, 8 zu variieren und deren Anzahl dem jeweils günstigsten Verwendungszweck anzupassen. Eine Befestigungsmittelanordnung 6 kann somit auch mehr als zwei erste Befestigungsmittel 7 und mehr als zwei zweite Befestigungsmittel 8 aufweisen. Demzufolge können an einer Flaschenhalterung 1 auch mehr als eine Befestigungsmittelanordnung 6 vorgesehen sein.

Man kann ferner an den zweiten Befestigungsmitteln 8 paarweise angeordnete, bevorzugt horizontale Vorsprünge anordnen, die vom Rücken 2 wegragen und die jeweils mit einem horizontalen Durchbruch ausgestattet sind. Die Vorsprünge ragen dann über den Umriss eines vertikalen Gitterstabes 12 hinaus. In die horizontal angeordneten Durchbrüche der paarweisen Vorsprünge lässt sich dann ein Sicherungsmittel, beispielsweise ein Stift unverlierbar einsetzen, so dass der vertikale Gitterstab 12 eingeschlossen und damit die Flaschenhalterung 1 zusätzlich gegen unbefugtes Entfernen gesichert ist.

Aus Gründen der Stabilität kann die Führungseinrichtung 3 mit Hilfe von wenigstens zwei vertikal verlaufenden Stegen mit der Stützeinrichtung 4 verbunden sein, so dass die Flaschenhalterung 1 an einen korbartigen Behälter erinnert. Dabei können die Stege, nach unten konisch sich annähernd so angeordnet sein, dass gleiche Flaschenhalterungen 1, mit der Stützeinrichtung 4 voraus, raumsparend ineinandersteckbar sind.

Schließlich ist es möglich, die Öffnung 3a der Flaschenhalterung 1 so zu gestalten, dass diese in der Lage ist, auch zwei aufrecht stehende Getränkeflaschen 17 aufzunehmen. Die Öffnung 3a kann dann zum Beispiel von oben betrachtet etwa die Form einer liegenden Acht aufweisen.

## Patentansprüche

1. Flaschenhalterung (1) zum Befestigen an einer durch kreuzweise angeordnete Gitterstäbe (11, 12) gebildeten Drahtgitterstruktur (10), mit einer an einem Rücken (2) befindlichen Führungseinrichtung (3) sowie mit einer ebenfalls am Rücken (2) angeordneten, als Boden dienenden Stützeinrichtung (4) zur Aufnahme und zum Tragen von wenigstens einer in aufrechter Lage befindlichen Getränkeflasche (17) und mit einer Befestigungsmittelanordnung (6), die zum Befestigen der Flaschenhalterung (1) an der Drahtgitterstruktur (10) bestimmt ist, wobei die Befestigungsmittelanordnung (6) wenigstens ein erstes Befestigungsmittel (7) zum Ergreifen eines horizontalen Gitterstabs (11) und wenigstens ein zweites Befestigungsmittel (8) zum Ergreifen eines vertikalen Gitterstabs (12) der Drahtgitterstruktur (10) aufweist und wobei sich das wenigstens eine zweite Befestigungsmittel (8) innerhalb des Umrisses des Rückens (2) befindet, **dadurch gekennzeichnet, dass** sich an der Flaschenhalterung (1) korrespondierende Verbindungsmittel (9) befinden, die senkrecht oder waagrecht angeordnet sind und mit deren Hilfe sich die Flaschenhalterung (1) im Zuge eines Zusammenschiebevorgangs mit einer weiteren gleichen Flaschenhalterung (1) zusammenfügen lässt, dass das wenigstens eine zweite Befestigungsmittel (8) ein ortsfestes Verschlussteil (8a) sowie ein bewegbares Rastteil (8b) aufweist und zusammen mit dem Rücken (2) einen Zwischenraum (8c) zur Aufnahme eines vertikalen Gitterstabs (12) bildet.

2. Flaschenhalterung nach Anspruch 1, **dadurch gekennzeichnet, dass** zwischen zwei ersten Befestigungsmitteln (7) wenigstens ein zweites Befestigungsmittel (8) angeordnet ist.

3. Flaschenhalterung nach Anspruch 1, **dadurch gekennzeichnet, dass** sich die komplette Befestigungsmittelanordnung (6) innerhalb des Umrisses des Rückens (2) befindet.

4. Flaschenhalterung nach Anspruch 1, **dadurch gekennzeichnet, dass** am wenigstens einen zweiten Befestigungsmittel (8) Vorsprünge zur Aufnahme eines zusätzlichen Sicherungsmittels vorgesehen sind.

5. Flaschenhalterung nach Anspruch 1, **dadurch gekennzeichnet, dass** an der Führungseinrichtung (3) nach unten weisende, elastische und ausweichbare Stützelemente zum Erfassen und Halten einer Getränkeflasche (17) vorgesehen sind.

6. Flaschenhalterung nach Anspruch 1, **dadurch gekennzeichnet, dass** an der Führungseinrichtung (3) und/oder an der Stützeinrichtung (4) ein Werbeträger angeordnet ist.

7. Flaschenhalterung nach Anspruch 1, **dadurch gekennzeichnet, dass** die Führungseinrichtung (3) mit Hilfe von wenigstens zwei vertikal verlaufenden Stegen mit der Stützeinrichtung (4) verbunden ist, wobei die Stege konisch so angeordnet sind, dass gleiche Flaschenhalterungen (1) mit der Stützeinrichtung (4) voraus, raumsparend ineinandersteckbar sind.

8. Flaschenhalterungseinheit (1a), gebildet durch wenigstens zwei miteinander verbundene Flaschenhalterungen (1) gemäß Anspruch 1 oder gemäß Anspruch 1 und einem der folgenden Ansprüche 2 bis 7.

## Claims

1. Bottle holder (1) for fastening to a wire lattice structure (10) formed by lattice bars (11, 12) arranged crosswise, having a guide device (3) which is situated on a back (2) and having, likewise arranged on the back (2), a support device (4) serving as base and intended for receiving and for supporting at least one beverage bottle (17) situated in an upright position, and having a fastening means arrangement (6) which is intended for fastening the bottle holder (1) to the wire lattice structure (10), wherein the fastening means arrangement (6) has at least one first fastening means (7) for seizing a horizontal lattice bar (11) and at least one second fastening means (8) for seizing a vertical lattice bar (12) of the wire lattice structure (10), and wherein the at least one second fastening means (8) is situated within the outline of the back (2), **characterized in that** corresponding connection means (9) are situated on the bottle holder (1) which are arranged vertically or horizontally and by means of which, in the course of a pushing-together operation, the bottle holder (1) can be joined together with a. further identical bottle holder (1), **in that** the at least one second fastening means (8) has a positionally fixed closure part (8a) and a movable latching part (8b) and forms, together with the back (2), an interspace (8c) for receiving a vertical lattice bar (12).

2. Bottle holder according to Claim 1, **characterized in that** at least one second fastening means (8) is arranged between two first fastening means (7).

3. Bottle holder according to Claim 1, **characterized in that** the complete fastening means arrangement (6) is situated within the outline of the back (2).

4. Bottle holder according to Claim 1, **characterized in that** projections for receiving an additional securing means are provided on at least one second fastening means (8).

5. Bottle holder according to Claim 1, **characterized in that** downwardly pointing, elastic and deflectable supporting elements for sizing and holding a beverage bottle (17) are provided on the guide device (3).

6. Bottle holder according to Claim 1, **characterized in that** an advertising medium is arranged on the guide device (3) and/or on the support device (4).

7. Bottle holder according to Claim 1, **characterized in that** the guide device (3) is connected to the support device (4) by means of at least two vertically extending webs, wherein the webs are arranged conically in such a way that identical bottle holders (1), with the support device (4) ahead, can be plugged into one another in a space-saving manner.

8. Bottle holder unit (1a), formed by at least two interconnected bottle holders (1) according to Claim 1 or according to Claim 1 and one of the following Claims 2 to 7.

## Revendications

1. Support de bouteille (1) pour la fixation à une structure de grille métallique (10) formée par des barres de grille (11, 12) disposées en croix, comprenant un dispositif de guidage (3) se trouvant sur un dos (2) ainsi qu'un dispositif d'appui (4) également disposé sur le dos (2), servant de fond, pour recevoir et porter au moins une bouteille de boisson (17) en position debout et comprenant un agencement de moyens de fixation (6) qui est prévu pour la fixation du support de bouteille (1) à la structure de grille métallique (10), l'agencement de moyens de fixation (6) présentant au moins un premier moyen de fixation (7) pour saisir une barre de grille horizontale (11) et au moins un deuxième moyen de fixation (8) pour saisir une barre de grille verticale (12) de la structure de grille métallique (10), et l'au moins un deuxième moyen de fixation (8) se trouvant à l'intérieur du pourtour du dos (2), **caractérisé en ce que** des moyens de connexion (9) correspondants sont situés sur le support de bouteille (1), lesquels sont disposés perpendiculairement ou horizontalement et à l'aide desquels le support de bouteille (1) peut être assemblé au cours d'une opération d'assemblage avec un support de bouteille identique supplémentaire (1), **en ce que** l'au moins un deuxième moyen de fixation (8) présente une partie de fermeture fixe (8a) ainsi qu'une partie d'encliquetage mobile (8b) et forme conjointement avec le dos (2) un espace intermédiaire (8c) pour recevoir une barre de grille verticale (12).

2. Support de bouteille selon la revendication 1, **caractérisé en ce qu'**entre deux premiers moyens de fixation (7) est disposé au moins un deuxième moyen de fixation (8).

3. Support de bouteille selon la revendication 1, **caractérisé en ce que** l'agencement de moyens de fixation complet (6) se trouve à l'intérieur du pourtour du dos (2).

4. Support de bouteille selon la revendication 1, **caractérisé en ce que** des saillies pour recevoir un moyen de fixation supplémentaire sont prévues au niveau d'au moins un deuxième moyen de fixation (8) .

5. Support de bouteille selon la revendication 1, **caractérisé en ce que** des éléments d'appui tournés vers le bas, élastiques et pouvant être écartés, sont prévus au niveau du dispositif de guidage (3) pour saisir et retenir une bouteille de boisson (17) .

6. Support de bouteille selon la revendication 1, **caractérisé en ce qu'**un support publicitaire est disposé sur le dispositif de guidage (3) et/ou sur le dispositif d'appui (4).

7. Support de bouteille selon la revendication 1, **caractérisé en ce que** le dispositif de guidage (3) est connecté à l'aide d'au moins deux nervures s'étendant verticalement au dispositif d'appui (4), les nervures étant disposées sous forme conique de telle sorte que des supports de bouteilles identiques (1) puissent être enfichés les uns dans les autres, en économisant de l'espace, avec le dispositif d'appui (4) en avant.

8. Unité de support de bouteille (1a), formée par au moins deux supports de bouteille (1) connectés l'un à l'autre selon la revendication 1 ou selon la revendication 1 et l'une quelconque des revendications suivantes 2 à 7.
